# EUROPÄISCHE PATENTSCHRIFT

(11) **EP 0 716 641 B1**
(45) Veröffentlichungstag und Bekanntmachung des Hinweises auf die Patenterteilung: **14.01.1998**
(21) Anmeldenummer: 94926888.2
(22) Anmeldetag: 25.08.1994
(51) Int. Cl.: C01B 33/158, C04B 30/00, B01J 21/08, C08K 3/36, C08L 21/00

(54) **HYDROPHOBE KIESELSÄUREAEROGELE**
HYDROPHOBIC SILICIC ACID AEROGELS
AEROGELS HYDROPHOBES D'ACIDE SILICIQUE

(30) Priorität: 31.08.1993 DE 4329294
(43) Veröffentlichungstag der Anmeldung: 19.06.1996
(73) Patentinhaber: BASF AKTIENGESELLSCHAFT, 67056 Ludwigshafen (DE)
(72) Erfinder: ZIEGLER, Bernd, D-67071 Ludwigshafen (DE); MRONGA, Norbert, D-69221 Dossenheim (DE); TEICH, Friedhelm, D-68229 Mannheim (DE); HERRMANN, Günter, D-69115 Heidelberg (DE)
(86) Internationale Anmeldenummer: EP9402822
(87) Internationale Veröffentlichungsnummer: WO9506617

(56) Entgegenhaltungen:
- EP-A- 0 396 076
- FR-A- 2 123 399
- US-A- 2 249 767

## Beschreibung

Die vorliegende Erfindung betrifft neue hydrophobe Kieselsäureaerogele, erhältlich durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wäßrigen Lösungen anorganischer Basen, wobei der pH-Wert des Hydrogels im Bereich von 7,5 bis 11 gehalten wird, Verdrängung der in dem Hydrogel enthaltenen wäßrigen Phase durch Isopropanol und anschließende überkritische Trocknung des erhaltenen Alkogels.

Weiterhin betrifft die Erfindung die Herstellung dieser Aerogele und ihre Verwendung als thermisches Isoliermaterial, als Trägermaterial für Katalysatoren und als Zusatzstoff in Kautschuk.

Kieselsäureaerogele eignen sich aufgrund ihrer nur geringen Wärmeleitfähigkeit hervorragend als thermisches Isoliermaterial. Bekanntermaßen sind sie z.B. durch Ausfällen von Kieselsäure aus Wasserglas mit einer Säure, Auswaschen der ionischen Bestandteile aus dem gebildeten Hydrogel, Verdrängung des Wassers durch eine leichtersiedende, wasserlösliche organische Flüssigkeit, vor allem einen Alkohol wie Methanol, Erhitzen des so entstandenen, den Alkohol enthaltenden "Alkogels" unter überkritischem Druck auf eine Temperatur oberhalb der kritischen Temperatur der organischen Flüssigkeit und Entfernung der Flüssigkeit durch Entspannungsverdampfung bei der überkritischen Temperatur zugänglich. Gewünschtenfalls kann die wasserlösliche Flüssigkeit vor dieser überkritischen Trocknung durch eine wasserunlösliche organische Flüssigkeit oder auch flüssiges Kohlendioxid ausgetauscht werden (US-A-2 093 454, DE-A-34 29 671).

Das bei diesem Trocknungsprozeß entstandene großvolumige und großporige Kieselsäureaerogel kann durch Mahlen in Pulverform überführt werden. Eine spezielle Methode zur Herstellung kleiner Aerogelteilchen besteht nach der DE-A-21 03 342 darin, Wasserglas und Säure aus einer Mischdüse zu versprühen, wobei man tropfenförmige Teilchen erhält.

Dieses Verfahren wird auch in der DE-A-39 14 850 benutzt, um pigmenthaltige Kieselsäureaerogele herzustellen. Das bei einem pH-wert von 7,1 ± 0,1 gelierte Aerogelgranulat wird zunächst mit Wasser gewaschen, um den Natriumgehalt zu senken, dann wird das im Aerogelgranulat enthaltene Wasser durch z.B. Propanol, insbesondere durch Methanol ersetzt. Die überkritische Trocknung des methanolhaltigen Gels erfolgt anschließend aus einer methanolischen Suspension des Gelgranulats.

Die nach den bekannten Verfahren hergestellten Aerogele müssen jedoch noch einer hydrophobierenden Nachbehandlung unterzogen werden, da sie sonst durch eine rasch einsetzende Wasseraufnahme eine drastische Verschlechterung ihrer Isolationseigenschaften zeigen.

Üblicherweise werden für diesen Zweck Siliciumorganische Verbindungen, Silane und Chlorsilane eingesetzt, mit denen das getrocknete Gel in der Gasphase behandelt wird oder die auch bereits bei der Fällung oder der überkritischen Trocknung anwesend sein können. Diese Hydrophobierungsmittel sind jedoch kostspielig, und bei Verwendung von Chlorsilanen muß der entstehende Chlorwasserstoff entfernt und neutralisiert werden.

Der erfindung lag daher die Aufgabe zugrunde, hydrophobe Kieselsäureaerogele bereitzustellen, die sich in einfacher und wirtschaftlicher Weise herstellen lassen.

Demgemäß wurden hydrophobe Kieselsäureaerogele gefunden, welche durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wäßrigen Lösungen anorganischer Basen, wobei der pH-Wert des Hydrogels im Bereich von 7,5 bis 11 gehalten wird, Verdrängung der in dem Hydrogel enthaltenen wäßrigen Phase durch Isopropanol und anschließende überkritische Trocknung des erhaltenen Alkogels erhältlich sind.

Außerdem wurde das hierdurch definierte Verfahren zur Herstellung dieser Aerogele gefunden.

Nicht zuletzt wurde die Verwendung dieser Aerogele als thermisches Isoliermaterial, als Trägermaterial für Katalysatoren sowie als Zusatzstoff für Kautschuk gefunden.

Die als Ausgangsstoffe für die Kieselsäureaerogele dienenden Hydrogele können vorteilhaft aus Alkalimetall-Wasserglas, insbesondere Natronwasserglas, hergestellt werden. Dabei wird eine üblicherweise 10 bis 30, vorzugsweise 12 bis 20 gew.-%ige Wasserglaslösung mit einer verdünnten Säure, insbesondere einer Mineralsäure, vorzugsweise Schwefelsäure, homogen so vermischt, daß sich im Mischprodukt ein pH-Wert von in der Regel 7,5 bis 11, bevorzugt 8 bis 11, besonders bevorzugt 8,5 bis 10, ganz besonders bevorzugt 8,5 bis 9,5 einstellt. Besonders günstig wird hierfür, wie in der DE-A-21 03 243 beschrieben, eine Mischdüse verwendet, aus der das Sol versprüht wird und während der Flugphase in der Luft zu Hydrogeltröpfchen erstarrt.

Selbstverständlich ist es z.B. auch möglich, Hydrogelformkörper herzustellen, indem man Wasserglas und Säure in einer geeigneten Form zusammengibt und anschließend die Gelierung erfolgen läßt.

Weiterhin können die Hydrogele auch, wie in der DE-A-39 14 850 beschrieben, pigmenthaltig sein, wobei insbesondere solche Pigmente geeignet sind, die Infrarotstrahlung der Wellenlänge 3 bis 10 µm streuen, absorbieren oder reflektieren.

Vorzugsweise wird das entstandene Gel dann mit Wasser salzfrei gewaschen, wobei sich der pH-Wert des Hydrogels kaum verändert und nahezu dem im Mischprodukt eingestellten Wert entspricht. Dem Waschwasser können jedoch auch anorganische Basen wie Natronlauge oder Ammoniak zugesetzt werden. Hierbei ist darauf zu achten, daß das Hydrogel auch nach der Waschung einen pH-Wert in dem oben genannten Bereich von 7,5 bis 11, bevorzugt 8,5 bis 10, besonders bevorzugt 9 bis 10, aufweist. Säurezusätze zum Waschwasser sind daher in der Regel nicht geeignet.

Zweckmäßigerweise wird die Waschung so lange vorgenommen, bis die Leitfähigkeit des abfließenden Waschwassers etwa 20 bis 300, vorzugsweise 50 bis 150 µS/cm aufweist. Das entspricht einem Alkalimetall-(Natrium-) Gehalt des Hydrogels von in der Regel 0,1 bis 1,7, bevorzugt 0,4 bis 1,3 Gew.-%, ermittelt an einer bei 80°C im Wasserstrahlvakuum getrockneten Probe.

Die im Hydrogel enthaltene wäßrige Phase wird durch das isopropanol nahezu vollständig, d.h. bis auf einen Wassergehalt der abfließenden organischen Phase von in der Regel <0,2, vorzugsweise <0,1 Vol.-%, verdrängt. Vorteilhaft geschieht dieser Flüssigkeitsaustausch in einer Durchflußapparatur. Möglich ist auch der Austausch unter Druck. Üblicherweise wird der Austausch bei Raumtemperatur vorgenommen, man kann das Gemisch aus Hydrogel und Isopropanol jedoch auch auf bis zu 50°C erhitzen.

Die anschließende überkritische Trocknung kann wie üblich vorgenommen werden, indem man das Alkogel zusammen mit überschüssigem Isopropanol in einem Druckbehälter auf für das Isopropanol überkritische Bedingungen (d.h. auf eine Temperatur von etwa 240 bis 280°C und einen Druck von etwa 55 bis 90 bar) bringt, d.h. man erhitzt den Druckbehälter unter Begrenzung des Drucks auf eine überkritische Temperatur. Das Isopropanol wird dann durch Entspannen, vorzugsweise isothermes Entspannen, bevorzugt allmählich durch schwaches Öffnen des Druckventils entfernt.

Die erfindungsgemäßen Kieselsäureaerogele zeichnen sich durch vorteilhafte Eigenschaften aus. Insbesondere zeigen sie neben guten Wärmeisolationseigenschaften nur sehr geringe Neigung zur Wasseraufnahme.

Sie können mit Hilfe des erfindungsgemäßen Verfahrens in einfacher Weise hergestellt werden, wobei auf den Einsatz kostspieliger Hydrophobierungsreagentien verzichtet werden kann.

Sie eignen sich daher besonders vorteilhaft für die Wärmeisolierung, wobei sie sowohl als alleiniger Dämmstoff als auch als Basismaterial für wärmedämmende Verbundmaterialien eingesetzt werden können, und als Trägermaterial z.B. für Katalysatoren.

Sie können sowohl als Granulat (übliche Teilchengrößen von 1 bis 8 mm) als auch nach vorheriger Mahlung als Pulver (Teilchengrößen < 1 mm) eingesetzt werden.

Insbesondere, wenn sie als Pulver vorliegen, eignen sich die erfindungsgemäßen Kieselsäureaerogele vorteilhaft als Ersatzstoff für pyrogene oder hochdisperse Kieselsäuren, die in aufwendiger Weise durch Zersetzung von Tetrachlorsilan in einer Knallgasflamme hergestellt werden. Als geeignete Einsatzgebiete seien z.B. Kunststoffe, insbesondere auch natürliche und künstliche Kautschuke (z.B. für Autoreifen), Klebstoffe, Farben, Lacke, Pharmazie, Kosmetik, Papier-, Textil-, Mineralöl- und Faserindustrie sowie Glas-, Pyro- und Gießereitechnik genannt, wo die Aerogele vielfältige Wirkung als Dispergiermittel, Verstärker, Rieselhilfe, Schwebemittel, Füllmittel, Entschäumer und/oder Absorber zeigen. Handelt es sich um wäßrige Anwendungszwecke, können die Aerogele nach einer thermischen Nachbehandlung zur Hydrophilierung selbstverständlich auch für diese Zwecke verwendet werden und stehen damit auch hier als günstiger Einsatzstoff zur Verfügung.

### A) Herstellung und Prüfung eines hydrophoben Kieselsäureaerogels

### Beispiel 1

In einer Mischdüse, wie sie in der DE-A-21 03 243 beschrieben ist, wurden bei 20°C und 2,5 bar 45,7 l/h 13 gew.-%ige Wasserglaslösung (hergestellt durch Verdünnen einer technischen Wasserglaslösung mit 27 Gew.-% SiO₂ und 8 Gew.-% Na₂O mit Wasser) und 6 l/h 23 gew.-%ige Schwefelsäure zusammengeführt. Das durch fortschreitende Neutralisation der Wasserglaslösung in der Mischkammer gebildete unbeständige Hydrosol hatte einen pH-Wert von 8,1 ± 0,1 und wurde nach einer Verweilzeit von 0,1 s durch das Düsenmundstück (2 mm Durchmesser) versprüht. Der Flüssigkeitsstrahl zerfiel während des Flugs durch die Luft in einzelne Tropfen, die vor dem Auftreffen im Wasserbecken zu transparenten, mechanisch stabilen Hydrogelkugeln erstarrten.

Das Hydrogel wurde solange mit entsalztem Wasser gewaschen, bis die abfließende Waschflüssigkeit eine elektrische Leitfähigkeit von ≤ 110 µS/cm und einen pH-Wert von 9,8 ± 0,1 aufwies. Der Natriumgehalt einer bei 80°C im Wasserstrahlvakuum getrockneten Probe des Hydrogels betrug 1,1 Gew.-%.

Dann wurde das im Hydrogel enthaltene Wasser durch Isopropanol ausgetauscht. Dazu wurden 2000 g Hydrogel in einen 5 1-Behälter gegeben, der vollständig mit Isopropanol gefüllt wurde. Bei 25°C wurde solange Isopropanol durch den Behälter gepumpt, bis der Wassergehalt des abfließenden Isopropanols <0,1 Vol.-% betrug. Dazu wurden insgesamt 8 l Isopropanol benötigt.

Zur überkritischen Trocknung wurde das erhaltene Alkogel zusammen mit 10 l Isopropanol in einen Druckbehälter von 20 l Volumen gegeben und innerhalb von 5 h auf 270°C erhitzt, wobei der Druck auf 90 bar begrenzt wurde. Danach wurde innerhalb von 60 min isotherm entspannt.

Das abgekühlte Produkt wurde entnommen und ca. 2 h bei 200 mbar und 80°C nachgetrocknet.

Das erhaltene Kieselsäureaerogel lag in Form eines Granulats mit einer Teilchengrößenverteilung von 1 bis 8 mm vor. Zur Hälfte wurde es durch 5stündiges Mahlen mit Glaskugeln in ein Pulver überführt.

Die charakteristischen Daten Schüttdichte 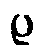 [kg/m³] (angelehnt an ISO 3944), spezifische Oberfläche [m²/g] nach BET, Wärmeleitfähigkeit λ₁₀ [W/m·K] nach DIN 52 616 und Wasseraufnahme [Gew.-%] nach 30 d Lagerung im Exsikkator bei 25°C und einer relativen Feuchte von 95 % sind in Tabelle 1 für das Granulat und das Pulver zusammengestellt.

### Vergleichsbeispiel 1

Zum Vergleich wurde analog Beispiel 1 der DE-A-39 14 850 ein Kieselsäureaerogel hergestellt, bei dem die Hydrogelbildung bei einem pH-Wert von 7,1 ± 0,1 erfolgte.

Die charakteristischen Daten dieses Aerogels sind ebenfalls in Tabelle 1 aufgeführt.

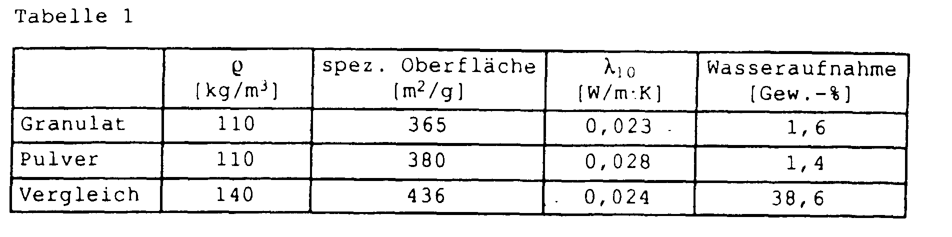

### B) Anwendung in Naturkautschuk

### Beispiel 2

Das gemäß Beispiel 1 hergestellte Kieselsäureaerogel wurde nach vorheriger Mahlung (mittlere Teilchengröße 60 µm, Teilchengrößenverteilung von 1 bis 400 µm) auf einem Zweiwalzenstuhl bei 60°C in Naturkautschuk eingearbeitet.

Die Mischung hatte folgende Zusammensetzung:
- 100 Gew.-Teile: Naturkautschuk (Ribbed Smoked Sheets Qualität 1 von Weber + Schaer, Hamburg)
- 1,5 Gew.-Teile: Polyethylenglykol (Pluriol® E 9000, BASF)
- 2 Gew.-Teile: PE-Lichtschutzwachs (Antilux® 500, Rheinchemie)
- 2 Gew.-Teile: Phenol-Alterungsschutz (Vulkanox® BKF, Bayer)
- 5 Gew.-Teile: Zinkoxid als Aktivator
- 1,5 Gew.-Teile: Stearinsäure als Aktivator
- 2,5 Gew.-Teile: Schwefel (5 % gecoatet; Struktol® SU 95, Schill + Sailacher)
- 1,25 Gew.-Teile: Beschleuniger Mercaptobenzothiazol (Vulkacit® DM/C, Bayer)
- 0,5 Gew.-Teile: Beschleuniger Diphenylguanidin (Vulkacit D)
- 30 Gew.-Teile: Aerogelpulver

Die charakteristischen Daten der Mischung Reaktionszeit-Vulkametrie [min] nach DIN 53 529, Temperatur nach Verarbeitung [°C] sowie Reißfestigkeit [N/mm²] nach DIN 53 504, Shore Härte A nach DIN 53 505 und Viskosität [Mooney Units, MU] nach DIN 53 523 sind in Tabelle 2 zusammengestellt.

### Vergleichsbeispiel 2

Analog Beispiel 2 wurde eine Kautschukmischung unter Verwendung von herkömmlicher pyrogener Kieselsäure der BET-Oberfläche 200 m²/g hergestellt.

Die charakteristischen Daten dieser Mischung sind ebenfalls in Tabelle 2 aufgeführt.

**Tabelle 2**

| | Beispiel 2 | Vergleichsbeispiel 2 |
|---|---|---|
| Reaktionszeit [min] | 17,4 | 42,8 |
| Temperatur nach Verarbeitung [°C] | 80 | > 100 |
| Reißfestigkeit [N/mm²] | 20,3 | 15,0 |
| Shore Härte A [...] | 57,4 | 59,7 |
| Viskosität [MU] | 89,9 | 76,1 |

## Patentansprüche

1. Hydrophobe Kieselsäureaerogele, erhältlich durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wäßrigen Lösungen anorganischer Basen, wobei der pH-Wert des Hydrogels im Bereich von 7,5 bis 11 gehalten wird, Verdrängung der in dem Hydrogel enthaltenen wäßrigen Phase durch Isopropanol und anschließende überkritische Trocknung des erhaltenen Alkogels.

2. Verfahren zur Herstellung von hydrophoben Kieselsäureaerogelen, dadurch gekennzeichnet, daß man es gemäß den in Anspruch 1 definierten Verfahrensschritten vornimmt.

3. Verwendung von Kieselsäureaerogelen gemäß Anspruch 1 als thermisches Isoliermaterial.

4. Verwendung von Kieselsäureaerogelen gemäß Anspruch 1 als Trägermaterial für Katalysatoren.

5. Verwendung von Kieselsäureaerogelen gemäß Anspruch 1 in Kautschuk.

## Claims

1. A hydrophobic silica aerogel obtainable by reacting a waterglass solution with an acid at a pH of from 7.5 to 11, substantially removing ionic constituents from the resulting silica hydrogel by washing with water or dilute aqueous solutions of inorganic bases, while the pH of the hydrogel is kept in the range from 7.5 to 11, displacing the aqueous phase contained in the hydrogel by isopropanol, and subsequent supercritical drying of the resulting alcogel.

2. A process for preparing hydrophobic silica aerogels, which comprises carrying out the process steps defined in claim 1.

3. The use of silica aerogels as claimed in claim 1 as thermal insulating material.

4. The use of silica aerogels as claimed in claim 1 as support material for catalysts.

5. The use of silica aerogels as claimed in claim 1 in rubber.

## Revendications

1. Aérogels d'acide silicique hydrophobes, obtenus par réaction d'une solution de silicate soluble avec un acide à un pH de 7,5-11, libération poussée de l'hydrogel d'acide silicique formé des composants ioniques par lavage à l'eau ou avec des solutions aqueuses diluées de bases minérales, où le pH de l'hydrogel est maintenu dans le domaine de 7,5 à 11, élimination des phases aqueuses contenues dans l'hydrogel par de l'isopropanol puis séchage surcritique de l'alcogel obtenu.

2. Procédé de fabrication d'aérogels d'acide silicique hydrophobes, caractérisé en ce que l'on procède selon les étapes du procédé définies dans la revendication 1.

3. Utilisation d'aérogels d'acide silicique selon la revendication 1 en tant que matériau d'isolation thermique.

4. Utilisation d'aérogels d'acide silicique selon la revendication 1 en tant que matériau de support pour catalyseurs.

5. Utilisation d'aérogels d'acide silicique selon la revendication 1 dans du caoutchouc.
